(19) Europäisches Patentamt / European Patent Office / Office européen des brevets

(11) **EP 4 116 953 B1**

(12) **EUROPEAN PATENT SPECIFICATION**

(45) Date of publication and mention
of the grant of the patent:
**20.08.2025  Bulletin 2025/34**

(21) Application number: **22177643.8**

(22) Date of filing: **07.06.2022**

(51) International Patent Classification (IPC):
**H04B 7/0452** (2017.01)    **H04B 7/06** (2006.01)
**H04L 5/00** (2006.01)    **G08G 1/00** (2006.01)

(52) Cooperative Patent Classification (CPC):
**H04B 7/0617; H04B 7/0452;** G08G 1/22;
H04L 5/0023; H04L 5/0033; H04L 5/0048;
H04W 4/46; H04W 12/082

(54) **METHOD FOR VEHICLE COMMUNICATING WITH ONE OR MORE FURTHER VEHICLES, APPARATUS, VEHICLE AND COMPUTER PROGRAM**

VERFAHREN FÜR FAHRZEUGE, DIE MIT EINEM ODER MEHREREN WEITEREN FAHRZEUGEN KOMMUNIZIEREN, GERÄT, FAHRZEUG UND COMPUTERPROGRAMM

PROCÉDÉ POUR VÉHICULE COMMUNIQUANT AVEC UN OU PLUSIEURS AUTRES VÉHICULES, APPAREIL, VÉHICULE ET PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **08.07.2021  EP 21184593**

(43) Date of publication of application:
**11.01.2023  Bulletin 2023/02**

(73) Proprietors:
• **VOLKSWAGEN AG**
  **38440 Wolfsburg (DE)**
• **Seat, S.A.**
  **08760 Martorell (ES)**

(72) Inventors:
• **MONTERO BAYO, Luca**
  **08011 Barcelona (ES)**
• **PFADLER, Andreas**
  **13357 Berlin (DE)**

(74) Representative: **2SPL Patentanwälte PartG mbB**
  **Landaubogen 3**
  **81373 München (DE)**

(56) References cited:
EP-A1- 3 579 443     US-A1- 2009 309 709
US-A1- 2020 057 453     US-B1- 10 440 668

**Description**

The present disclosure relates to the field of wireless communication. Embodiments relate to a method for a vehicle communicating with one or more further vehicles, an apparatus, a vehicle and a computer program, more particularly, but not exclusively, to a concept for communicating with authorized vehicles using spatially separated signals.

The development of 5G has brought increased attention to the automotive industry as a vertical manufacturer expected to leverage the most advanced features of the new generation of wireless communications. Among the main novelties of 5G, a wide range of spectrum possibilities (currently licensed up to the 28 GHz band - the first-ever Millimeter wave band for mobile use), enhanced support for high mobility scenarios and new mechanisms to guarantee and predict the experienced Quality of Service (QoS), have been established as key functions to support an increasingly connected transportation ecosystem. Besides, the latest standard release (Rel. 16) has given support to Vehicle-to-Everything (V2X) communications with New Radio (NR) technology, allegedly allowing vehicles to make use of the same spectrum options, even for Vehicle-to-Vehicle (V2V) use cases.

Providing the NR support of V2X, vehicles are also capable of communicating at frequencies above 6 GHz. In 5G, these higher frequency bands are allocated at the mmWave range of the spectrum (30-300GHz). The use of higher frequency bands in communications implies propagating in a harsher channel, where the free-space path loss scales with ($f^2$), and shading by obstacles and atmospheric effects (i.e., water vapor and oxygen absorption, or rain) take a non-negligible role. Services relying on higher frequency systems, with their inherently high channel-induced attenuation, might find challenging to deliver satisfactory QoS in some situations where signal power attenuation is increased, lowering the received Signal-to-Noise Ratio. As a result, 5G User Equipment (UE) is reliant on multi-antenna front-ends to perform beamforming and focus the radiate power towards the intended transmitter/receiver.

It is thus worth considering that vehicles may be equipped with an advanced multi-antenna system. While vehicles become increasingly reliant on connectivity systems and the data exchanged with them to give support to different use cases, nodes become susceptible to potential impairment of these services if the radio link performance deteriorates. These impairments can be caused my malfunctioning or malicious nodes.

EP 3 579 443 A1shows an apparatus for a vehicle communicating in multiple mobile communication systems. The apparatus comprises one or more interfaces configured to communicate in the mobile communication systems using an adaptive antenna. Further, the apparatus comprises a control module configured to determine a setting for the adaptive antenna to obtain spatially separated signals using the same time and frequency resources, and to detect different messages from the spatially separated signals.

US 10 637 142 B1 shows a system including a transceiver to communicate with a predetermined target one or more antennas coupled to the transceiver each electrically or mechanically steerable to the predetermined target and an edge processing module coupled to the transceiver and one or more antennas to provide low-latency computation for the predetermined target.

WO 2019 / 160 973 A1 shows a wireless transmit receive unit (WTRU), which may receive a configuration message including a set of common sidelink reference signals and a list of available resources (e.g., a pool) for a particular direction or beam type. The WTRU may monitor for the common sidelink reference signals in a plurality of beams (e.g., receive beams) and measure the energy for each of the common sidelink reference signals against a threshold. The WTRU may determine a set of active beams from the plurality of beams based on the measurements previously taken. The WTRU may further narrow down the set of active beams based on contextual information, such as the WTRU heading and/or location. The WTRU may select one or more beams from the set of active beams based on the available resources to transmit in.

US 10,440,668 B1 discloses A platoon server in communication with a plurality of vehicles. The platoon server is programmed to receive a platoon request from a platoon candidate vehicle, the request including platoon data indicative of size, transmit power, and location of the candidate vehicle, admit the candidate vehicle to be a member vehicle of the platoon, and update which member vehicle of the platoon is platoon beacon based upon platoon data of each member vehicle of the platoon.

Users might be susceptible of undesired radiation from different directions, a problem that might intensify when using omnidirectional antennas. This undesired radiation might come from a cyber-attack (e.g., radio jamming), a malfunctioning node or plain congestion. There already exist mechanisms to alleviate the interference caused by congestion (such as power control, less aggressive scheduling). However, the interference caused by either malfunctioning or malicious nodes may jeopardize the quality of the signal and disable or severely impair some V2X services on which safety systems may rely upon.

It is therefore a finding that communication between a vehicle and one or more further vehicles may strongly depend on interference caused by malfunctioning or malicious nodes in vehicular scenarios and communication may be improved by use of one or more authorized vehicles. Thus, the communication can be improved by reducing this interference, e.g., by reducing a number of communication partner by accepting only authorized vehicles. For example, one or more authorized vehicles can be determined, and spatially separated signals can be formed such that signals from other (e.g., unauthorized) vehicles can be reduced/minimized. That way, interference at the vehicle can be reduced and the communication may be improved.

Examples provide a method for a vehicle communicating with one or more further vehicles. The method comprises determining one or more authorized vehicles from a plurality of vehicles and determining a setting for an adaptive antenna to obtain spatially separated signals to communicate with the one or more authorized vehicles. Further the method comprises communicating with the one or more authorized vehicles using the spatially separated signals. Thus, interference at the vehicle can be reduced, e.g., by determining the setting for the adaptive antenna such that only signals from the one or more authorized vehicles can be received. That way, the communication between the vehicle and the one or more further vehicles can be improved.

In an example, the spatial separated signals may be determined such that the spatially separated signals are directed towards the one or more authorized vehicles. Thus, a signal received by the vehicle from the one or more vehicles can be improved, e.g., a signal strength can be increased.

In an example, determining the one or more authorized vehicles may be performed by an authorization process between the vehicle and the one or more authorized vehicles. Thus, the vehicle may identify the one or more authorized vehicles in an eased way.

In an example, determining the one or more authorized vehicles may be performed by receiving data about the one or more authorized vehicles. Thus, a data traffic between the vehicle and the one or more authorized vehicles may be reduced. For, example the vehicle may receive an authorization list comprising the one or more authorized vehicles, which may be used for the authorization process.

In an example, the method may further comprise determining a signal parameter of the separated signals and if the signal parameter exceeds a threshold removing a vehicle from the one or more authorized vehicles, determining a new setting for the adaptive antenna to obtain spatially separated signals and if the signal parameter still exceeds the threshold repeat removing another vehicle from the one or more authorized vehicles and determining a new setting until the signal parameter does not exceed the threshold. Thus, the signal parameter can be adjusted to ensure a desired performance. For example, by removing a vehicle from the one or more authorized vehicles a setting for the adaptive antenna can be adjusted to the remaining one or more authorized vehicles, which may decrease interference and/or increases the signal parameter, e.g., signal-to-noise ratio (SNR), signal strength, beam width etc., wherein the threshold can be e.g., a min signal strength etc.

In an example, the method may further comprise determining a signal parameter of the separated signals and if the signal parameter exceeds a threshold changing a radio access technology (RAT) and/or a frequency band of the spatially separated signals. Thus, a suitable RAT and/or frequency band can be chosen for communication, which may lead to decreased interference.

In an example, the threshold may depend on an application-specific group of nodes. Thus, depending on an application (and a specific group of nodes corresponding to this application) the threshold can be adjusted. For example, for an application that requires a high SNR a number of the one or more authorized vehicles may be less as for an application that does not require such a high SNR.

In an example, the method may further comprise determining a position of one or more unauthorized vehicles and wherein the spatial separated signals are determined such that received signals from the one or more unauthorized vehicles are decreased. Thus, interference at the vehicle may be decreased due to decreased received signals from the one or more unauthorized vehicles.

In an example, the one or more unauthorized vehicles may be determined based on a cooperative awareness message or beam-based sensing. Thus, the vehicle can determine the one or more unauthorized vehicles in an appropriate way.

In an example, the adaptive antenna may comprise multiple antenna elements to obtain the spatially separated signals using beamforming and/or spatial interference cancellation techniques. Thus, the spatially separated signals can be formed in an appropriate way.

In an example, the method may further comprise determining an angular direction of a signal using predefined pilot or synchronization signal settings of a radio access technology. Thus, forming of the spatially separated signals can be adjusted to a RAT.

In an example, the method may further comprise extracting a signal based on the estimated angular direction. Thus, the spatially separated signals can be formed in an appropriate way.

Examples further provide an apparatus, comprising one or more interfaces configured to communicate with a communication device or user equipment. The apparatus further comprises processing circuitry configured to control the one or more interfaces and to perform the method for user equipment and/or a communication device described above.

Examples further provide a vehicle comprising the apparatus as described above.

Examples further relate to a computer program having a program code for performing the method described above, when the computer program is executed on a computer, a processor, or a programmable hardware component.

Some examples of apparatuses and/or methods will be described in the following by way of example only, and with reference to the accompanying figures, in which

Fig. 1 shows an example of a method for a vehicle;

Fig. 2 shows a SS Burst and S-SSB structure in NR V2X SL;

Fig. 3 shows a slot and resource grid structure in NR V2X SL;

Fig. 4a-4b show proposed beam management strategies for V2V beamforming;

Fig. 5 shows a radiation pattern for the beamset used in the evaluation (Directivity [dB]);

Fig. 6 shows a mean recovery time of beam management strategies for different number of neighbors in LOS and NLOS visibility conditions;

Fig. 7 shows a loss complementary cumulative distribution of beam management strategies in different traffic scenario for $N_{ngh}$ = {4,10} and LOS conditions;

Fig. 8 shows a beam-based Channel Usage Ratio (BB-CUR) for medium intensity data traffic and the resources needed by the proposed strategies, compared for different total channel bandwidths (BW) and number of neighbors ($N_{ngh}$); and

Fig. 9 shows a beam-based Channel Usage Ratio (BB-CUR) of the resources needed by the proposed strategies for different $K_{CSI}$, transmission power of 23 dBm and 200 MHz bandwidth; and

Fig. 10 shows a block diagram of an apparatus.

Some examples are now described in more detail. However, other possible examples are not limited to the features of these embodiments described in detail. Other examples may include modifications of the features as well as equivalents and alternatives to the features. Furthermore, the terminology used herein to describe certain examples should not be restrictive of further possible examples.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

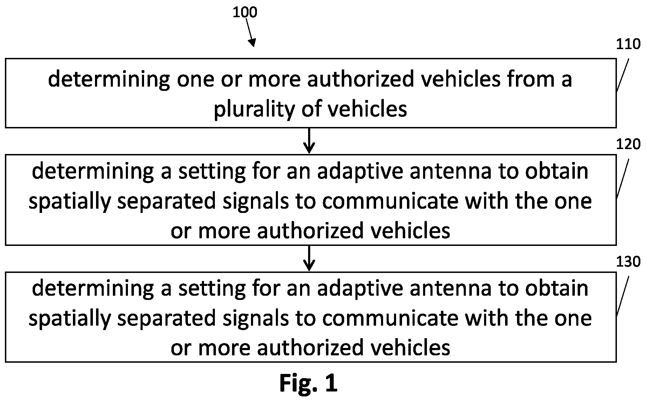

Fig. 1 shows an example of method 100 for a vehicle. The method 100 is for a vehicle communicating with one or more further vehicles. The method 100 comprises determining 110 one or more authorized vehicles from a plurality of vehicles and determining 120 a setting for an adaptive antenna to obtain spatially separated signals to communicate with the one or more authorized vehicles. Further, the method 100 comprises communicating 130 with the one or more authorized vehicles using the spatially separated signals. The spatially separated signals can be formed by different beams. Thus, interference at the vehicle can be reduced, e.g., by determining the setting for the adaptive antenna such that only signals, e.g., beams, from the one or more authorized vehicles can be received.

In general, the vehicle/further vehicle may comprise a device that is capable of communicating wirelessly. For example, the vehicle/further vehicle may be configured to communicate in a cellular mobile communication system. Accordingly the vehicle/further vehicle may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In addition the vehicle and the further vehicle may be suitable for, or configured to, communicating/communicate via non-cellular communication systems, e.g., via a device-to-device vehicular communication system, e.g., according to the IEEE 802.11p standard (Institute of Electrical and Electronics Engineers standard 802.11p for vehicular communication) or via a wireless local area network (e.g., according to IEEE 802.11a, IEEE 802.11b, IEEE 802.11g, IEEE 802.11n, IEEE 802.11ac or IEEE 802.11ax, also known as Wi-Fi 1 through Wi-Fi 6(E)). In particular, the vehicle/further vehicle may be suitable for, or configured to, communicating/communicate in the frequency band between 5 GHz and 7.1 GHz, which covers communication in the 5 GHz band (for WiFi in the 5 GHz band), 5.9 GHz band (for vehicular communication according to the 802.11p standard) and between 5.9 GHz and 7.1 GHz (for WiFi in the 6 GHz band).

A connection between the vehicle and the further vehicle may be a wireless connection, e.g., a mmWave-based connection over the mobile communication system (e.g., using carrier frequencies of at least 20 GHz) or may be performed at lower carrier frequencies, e.g., using carrier frequencies of at most 7.5 GHz. For example, the wireless connection between the vehicle and the further vehicle may be initiated using the protocols of the mobile communication system, or using a short-range communication system, such as via a wireless local area network outlined above.

As is evident from the above example, while the communication between the vehicle and the further vehicle may occur via the mobile communication system, additional communication and/or alternatively communication between the vehicle and the further vehicle may occur via a vehicular communication system. Such communication may be carried out directly, e.g., by means of Device-to-Device (D2D) communication. Such communication may be carried out using the specifications of the vehicular communication system. An example of D2D is direct communication between vehicles, also referred to as Vehicle-to-Vehicle communication (V2V) or Vehicle-to-Everything (V2X), car-to-car, Dedicated Short Range Communication (DSRC), respectively. Technologies enabling such D2D-communication include 802.11p, 3GPP systems (4G, 5G, NR and beyond), etc.

For example, the COM may be broadcasted via sub-6GHz V2X bands to extend the spread of the data. A V2X communication, e.g., between the vehicle and the further vehicle may be Wireless Local Area Network (WLAN) technology and works directly between vehicle and vehicle (V2V) and/or traffic infrastructure (V2I), which form a vehicular ad-hoc network as two V2X senders come within each other's range. Messages like Cooperative Awareness Messages (CAM) or Basic Safety Message (BSM) and Decentralized Environmental Notification Messages (DENM) may be used for communication between the vehicles. Other roadside infrastructure related messages are Signal Phase and Timing Message (SPAT), in Vehicle Information Message (IVI), and Service Request Message (SRM).

In case of aiming to establish a link with the one or more (discovered) communication devices, e.g., the further/authorized vehicle, the vehicle may make an initial guess of the configuration of the antenna system to define a beam strategy (such as a reduced beamset for beamsweep, beamwidth, Angle of Departure, antenna weights, etc.) to transmit the signal. This initial guess might be based on a relative position, predicted/intended trajectory of both transmitting and receiving nodes, angle of arrival, etc.

A communication device can be located in the fixed or stationary part of the network or system. A communication device may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A communication device can be a wireless interface of a wired network, which enables transmission and reception of radio signals to a UE, such as the UE. Such a radio signal may comply with radio signals as, for example, standardized by 3GPP or, generally, in line with one or more of the above listed systems. Thus, a communication device may correspond to a NodeB, an eNodeB, a BTS, an access point, etc.

The communication that occurs before connection establishment, and that may be used to obtain said information, may be based on broadcasts of the vehicle, e.g., via the mobile communication system. Accordingly, the vehicle may be suitable for, or configured to, communicate in/via the further vehicle. For example, the vehicle, and in particular further vehicle, may be configured to communicate via one or more antennas via the mobile communication system. Additionally, the vehicle, and the further vehicle, may be configured to communicate via short-range communication, e.g., via a wireless local area network according to a variant of the IEEE 802.11 standard, via Bluetooth or via UWB.

Determining 110 one or more authorized vehicles from a plurality of vehicles may be performed by a processing circuitry of the vehicle. For example, an authorized vehicles may be a (further) vehicle, which is authorized to communicate with the vehicle. In principle, the one or more further vehicles may be the one or more authorized vehicles. For example, a number of authorized vehicles may depend on an antenna capacity of the vehicle. The vehicle can communicate only with a certain amount of authorized vehicle at a time.

The vehicle may be equipped with a connectivity system (CS) to deal with V2X communication. This CS may be equipped with an adaptive antenna system (AS) with one or more panels, each facing different radiating directions and composed of one or more antenna elements, fed by a digitally controlled analog feeding network. By use of the AS the vehicle may communicate with the one or more authorized vehicles.

Determining 120 a setting for an adaptive antenna system may be performed by a processing circuitry of the vehicle. The setting for the AS may depend on a number of the one or more authorized vehicles, a position of the one or more authorized vehicle, a data to be communicated between the vehicle and the one or more authorized vehicles, a desired quality of signal QoS, etc. Optionally, the setting for the AS may depend on the capability of the AS. The spatially separated signals may be spatially separated beams, which can be formed by the AS of the vehicle by beamforming.

Communicating 130 with the one or more authorized vehicles using the spatially separated signals may be done by the AS. For example, the AS may be used to form the spatially separated signals, e.g., spatially separated beams. Thus, the vehicle can generate different beams for communicating with a plurality of authorized vehicles. This way, interference between different signals can be reduced or even omitted.

The vehicle may be linked with the one or more authorized vehicles to exchange data, e.g., for a given service (S1). The vehicle may determine 120 the setting for the AS to obtain a sufficient communication. For example, the setting for the AS may come from a trade-off for QoS and antenna capabilities (e.g., beamswitching rate, beamwidth, gain, etc.).

The vehicle may be able to set of vehicles with which it is authorized to communicate, the one or more authorized vehicles, e.g., in a platoon the vehicles of the platoon. For example, if the vehicle is comprised by the platoon only further vehicles comprised by the platoon may be authorized vehicles. For example, only further vehicles of a specific type (e.g., a manufacturer) may be authorized vehicles.

The vehicle may be able to identify interferences and map them to angular regions in space (e.g. by using beam-based sensing) and/or locations (e.g. by sensors, CAM-like messages). This way, the vehicle can reduce interference for communicating with a plurality of authorized vehicles. Further, the vehicle may be able to identify whether these interferences affect a performance of S1.

If the interferences affect the performance of S1 the vehicle may determine 120 another setting to reconfigure the AS, e.g., to cancel the undesired user (e.g. by shaping the beam, adding radiation nulls in the undesired direction, removing an authorized vehicle, etc.). Optionally, the vehicle may switch to a different radio access technology (RAT) or frequency band, where these capabilities are enabled, e.g., the interference can be reduced or omitted.

In an example, the spatial separated signals may be determined such that the spatially separated signals are directed towards the one or more authorized vehicles. This way, a signal strength may be increased. For example, a QoS may be increased, since the separated signals, e.g., separated beams, are directed towards the one or more authorized vehicles. Optionally, a setting for the AS can be adjusted to match the spatially separated signals directed towards the one or more authorized vehicles, such that an interference can be reduced.

In an example, determining 110 the one or more authorized vehicles may be performed by an authorization process between the vehicle and the one or more authorized vehicles. For example, the authorization process may be a process of a platoon of a plurality of vehicles. The plurality of vehicles of the platoon may use a specific authorization process. This way, a determination 110 of the one or more authorized vehicles can be eased.

In an example, determining 110 the one or more authorized vehicles may be performed by receiving data about the one or more authorized vehicles. For example, the vehicle may receive information from a base station about each authorized vehicle, e.g., each vehicle comprised by a platoon. This way, data traffic between the vehicle and the one or more authorized vehicles can be reduced.

In an example, the method may further comprise determining a signal parameter of the separated signals and if the signal parameter exceeds a threshold removing a vehicle from the one or more authorized vehicles, determining a new setting for the adaptive antenna to obtain spatially separated signals and if the signal parameter still exceeds the threshold repeat removing another vehicle from the one or more authorized vehicles and determining a new setting until the signal parameter does not exceed the threshold. For example, the AS of the vehicle may be not capable to form spatially separated signals to communicate with each authorized vehicle of a plurality of authorized vehicle with a desired signal parameter, e.g., a signal strength, a QoS, a data rate, etc. Thus, the vehicle can remove a vehicle from the plurality of authorized vehicles, such that the number of authorized vehicles is reduced by one. Then the vehicle can determine a new setting for the AS, which may increase the signal parameter. The vehicle can remove one by one from the plurality of authorized vehicles until a desired value, e.g., a threshold, for the signal parameter is reached/undershot. This way, the vehicle can adjust a communication by maintaining the number of authorized vehicles.

In an example, the method may further comprise determining a signal parameter of the separated signals and if the signal parameter exceeds a threshold changing a radio access technology (RAT) and/or a frequency band of the spatially separated signals. This way, a capacity of the mobile communication system can be used in an improved way.

In an example, the threshold may depend on an application-specific group of nodes. For example, the vehicle may adjust a number of authorized vehicles based on a desired signal parameter, e.g., a SNR, a QoS. For example, for a higher required QoS a number of authorized vehicles may be reduced.

In an example, the method may further comprise determining a position of one or more unauthorized vehicles and wherein the spatial separated signals are determined such that received signals from the one or more unauthorized vehicles are decreased. For example, the setting of the AS may be adjusted, such that radiation nulls are directed towards unauthorized vehicles. This way, interferences caused by the unauthorized vehicles can be reduced.

In an example, the one or more unauthorized vehicles may be determined based on a cooperative awareness message or beam-based sensing. This way, the vehicle can determine the unauthorized vehicles without any further data traffic.

In an example, the adaptive antenna may comprise multiple antenna elements to obtain the spatially separated signals using beamforming and/or spatial interference cancellation techniques. In an example, the method may further comprise determining an angular direction of a signal using predefined pilot or synchronization signal settings of a radio access technology. Thus, forming of the spatially separated signals can be adjusted to a RAT.

In an example, the method may further comprise extracting a signal based on the estimated angular direction. Thus, the spatially separated signals can be formed in an appropriate way.

For example, the vehicle (VA) may be in a Cooperative Autonomous Cruise Control (CACC) string linked with several other vehicles, e.g., the one or more authorized vehicles. The VA may use an omnidirectional radiation pattern to send and receive messages, e.g., to/from the authorized vehicles.

The VA may identify an increased interference that may reduce a signal parameter, e.g., a packet delivery rate. Thus, the VA may sense with a mmWave antenna setup the interference with different beams within a predefined beamset. The VA may identify a beam (or angular region) where interferences are larger than expected.

For this beam, the VA may identify that an angular region corresponding to the beam is not authorized for the service (CACC). Thus, the VA may shape the receiving beams and may add nulls in the undesired directions to improve a SNR (e.g., a QoS). This way, the VA can determine 120 a setting for the AS to obtain spatially separated signals with an improved communication characteristic.

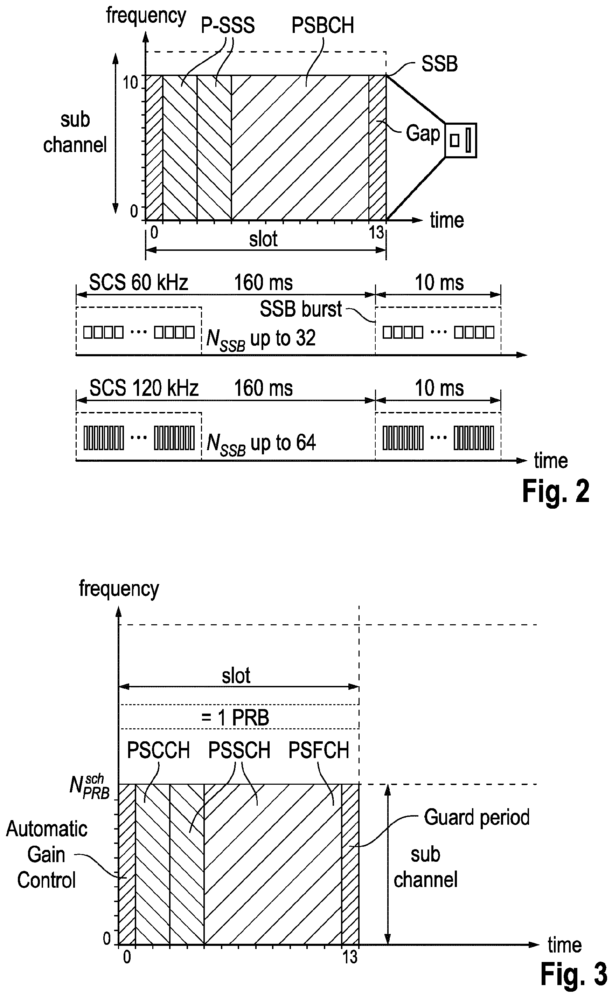

More details and aspects are mentioned in connection with the embodiments described above and/or below. The example shown in Fig. 1 may comprise one or more optional additional features corresponding to one or more aspects mentioned in connection with the proposed concept or one or more examples described below (e.g. Fig. 2 - 10).

Fig. 2 shows a SS Burst and S-SSB structure in NR V2X SL.

Cooperative Connected and Automated Mobility (CCAM) is expected to leverage the full potential of wireless communications. With the growing adoption of 5G and its support of Vehicle-to-Everything (V2X) communications, beamformed vehicular communications at millimeter-wave (mmWave) bands are expected to enable the most demanding connected driving applications. Beamformed V2X links present the challenge of beam management in such a fast-changing scenario, e.g., reducing interference between different beams.

Practical limitations of the 5G V2X stack to support successful beamforming procedures and two beam management strategies are shown below. Both strategies are evaluated in terms of power performance, beam recovery time and channel usage. The results suggest that significant differences apply when the beam is more frequently updated, whereas little improvement is seen by increasing the size of the beamset. Also, the selection of a proper strategy is shown to be important to alleviate the channel from overheads, and substantial differences in required signaling can be seen depending on the beam-tracking approach. The finding could be especially helpful for determining a setting for an adaptive antenna of a vehicle, e.g., as described above with reference to Fig. 1.

5G NR introduced in 3GPP Release 14 support for analog beamforming at both the base station and the UE with the so-called beam management procedures. Forecasting the need for sharp steerable beams, pertinent to maintain links operating at the mmWave band, beam management comprises a set of features to align the beams at both ends and ensure link stability. The procedures include the following aspects:

- Beam determination: selection of a suitable beam at one or both ends of the link.
- Beam measurement: allowing both ends to measure the characteristics of the received beamformed signals.
- Beam reporting: whereby beam measurement information is fed back to the transmitter.
- Beam sweeping: covering an angular sector by switching to different analog beams over the area.

These features allow acquiring enough information to determine proper beam pairs (i.e., aligned transmitting and receiving beams) along a data session with low-layer signaling.

Even though the 3GPP does not state unambiguously the specific method to perform beam management, the following procedures - described in - are supported:

- P-1: specially used to find initial beam pairs, a beam sweep at the transmitter is performed to select one or more transmitting and (if possible) receiving beams.

- P-2: once a beam pair is determined, a smaller set of beams from the transmitter can be swept over a reduced angular region to maintain the link. If needed, this smaller set can consist of narrower beams - a process also known as beam refinement.
- P-3: focused on beam determination at the receiver side, a previously-determined transmitting beam is fixed during a receiver beam sweep.

Note that in each of the procedures, one or more suitable beam measurements can be reported to increase robustness against beam failure, thereby a fast recovery can be triggered upon blockage, misalignment or outage. Nevertheless, some of these procedures are meant to be done periodically, while others (such as beam refinement) can be triggered if conditions allow it. It is therefore worth considering the overheads produced by the required signaling, and aim for a trade-off between perfect, sharp beam alignment and coarse beam pairing to alleviate channel congestion.

The support of NR for mmWave frequencies and beamforming entails defining reference signals that allow beam management procedures.

To perform initial access and synchronization between UE and BS, NR makes use of the SS Block, or SSB as shown in Fig. 2. Initially conceived for DL, an SSB spans 4 OFDM symbols in time and 240 subcarriers in frequency. It comprises the PSS, the SSS, as well as the PBCH and its associated DMRS .

In order to suit for beam management SSBs can be beamformed, and therefore, the 3GPP defines the so-called SS bursts, where a number of SSBs ($N_{SSB}$) can be transmitted to measure different beam pair combinations. Currently, the specifications support up to $N_{SSB}$ = 64 per burst for mmWave bands, which are grouped in the first 5 ms (half frame) of the SS burst periodicity ($T_{SS}$). This potentially allows encapsulating 64 different beam measurements in 5ms, in a process that can be periodically repeated every $T_{SS}$ = {5,10,20,40,80,160} ms.

The CSI framework in NR is a complex scheme by which UEs can perform channel measurements and report relevant information for link configuration. In DL, base stations send UE-specific CSI-RS with a high level of flexibility regarding its resource mapping, number of ports, and periodicity, and thus CSI-RS can be allocated virtually anywhere within the resource pool. Upon reception, the receiver measures the signals to issue a CSI report.

CSI-RS can also be beamformed to different angular regions providing a complementary, yet more flexible mechanism for beam management operations. As a result, CSI-RS can be used to perform additional beam searches during the remaining time between SS bursts. CSI-RS resources can be linked to the previous SSB, which can be convenient to update coarse beams in a surrounding reduced angular space, to trigger beam refinement, or even perform another full beam sweep in between. As such, CSI is indeed responsible of reporting which beamformed SSBs and CSI-RS resources have resulted in better received power in the measurements.

Although NR V2X allegedly supports the same frame structure and spectrum options as those established for downlink/uplink communications, the procedure to manage beamformed links in SL remains unspecified. This study aims to elucidate some of the main limitations that SL will experience for beam management aspects and also evaluate suitable strategies and configurations based on these constraints.

One concern that was raised with LTE-based V2X was the quick loss in reliability when tens of vehicles where simultaneously sharing the 10MHz channel reserved for ITS at 5.9 GHz. To increase resilience against interference, a need for additional bands for V2X was expressed by several studies in the field . At the same time, the use cases defined for future V2X easily made LTE V2X and the 5.9 GHz ITS band to fall short at fulfilling the requirements imposed by the industry. As a result, it is agreed that NR V2X should support both licensed and unlicensed ITS bands for SL operation. Access to any band can be orchestrated by base stations in a time division fashion, except when nodes are out-of-coverage and have to schedule autonomously their transmissions. This latter case has been particularly relevant in the design of LTE V2X at 5.9 GHz, but with the introduction of NR V2X this scheduling can extend to new bands. In this line, mmWave bands such as the 30 GHz and 63 GHz bands have been object of study by 3GPP , as they not only provide enough bandwidth to support some of the most demanding use cases, but also face the challenge of autonomous resource allocation at these frequencies.

The frame structure in NR V2X SL follows the same principles of NR. Resources are divided in PRBs, which consist of 12 subcarriers in frequency and a slot (14 OFDM symbols) in time. Numerologies determine the subcarrier spacing (*SCS*), which relates to the slot duration ($T_{slot}$) in an anti-proportional manner . At mmWave, $SCS^{\mu}$ = {60,120} kHz are supported, making each PRB to span $T_{slot}^{\mu} = \{0.25, 0.125\}$ ms , respectively.

Adopting the resource grid used in NR allows for flexible resource allocation. In SL, the building block for this grid is a subchannel, which is a slot-long cluster of $N_{PRB}^{sch} = \{10,12,15,20,25,50,75,100\}$ PRBs. It is thus worth noting that subchannel bandwidth will depend on numerology, but following the aforementioned anti-proportionality, when fewer subchannels can be accommodated in the available bandwidth, more slots will fit within a frame (10 ms).

With this arrangement, nodes using autonomous resource selection sense the available subchannels during a sensing window and determine which subchannels are unavailable for transmission, either by measuring an unacceptable level of interference (over a dynamic threshold) or by decoding the SCI of incoming transmissions, in which future resource reservations by other UEs are indicated. Then, resource selection by the sensing UE depends on multiple factors, as NR V2X supports both periodic and aperiodic traffic, as well as the newly introduced feedback-assisted unicast and groupcast. Generally, this resource selection will eventually depend on the priority and QOS requirements of the packet to be delivered, and therefore each UE will modulate its resource selection based on service requirements and whether the CR exceeds a certain threshold for congestion control . Note that beamforming drastically reduces the interference spread over unwanted directions, so mmWave SL will inherently experience higher CR alleviation that its sub-6 GHz counterpart, fostering greater spatial re-use of the time-frequency resources.

As suggested beam management should be supported in NR V2X using NR mechanisms as baseline. As such, both S-SSB and CSI-RS should be used for beam sweeping and CSI reports must provide the necessary feedback for beam alignment.

Synchronization in SL is structured to unify the resources occupied by SS bursts across all supported bands. As NR V2X might need to co-exist with LTE V2X at some bands, the 10 MHz channel bandwidth - relevant in LTE V2X - is to be supported, and thus 11 PRBs (132 subcarriers) is established as the frequency scope for all NR V2X S-SSB . The slot structure of each S-SSB to accommodate S-PSS, S-SSS and PSBCH is depicted in Fig. 2. Using this structure, it is specified that up to $N_{SSB} = 64$ for 120 kHz *SCS* (up to 32 for 60 kHz *SCS*) can be encapsulated within an SS burst in a 10 ms window . Finally, as also shown in Fig. 2, consecutive SS bursts are transmitted with a periodicity that is fixed to $T_{SS} = 160$ ms in SL.

More details and aspects are mentioned in connection with the embodiments described above and/or below. The example shown in Fig. 2 may comprise one or more optional additional features corresponding to one or more aspects mentioned in connection with the proposed concept or one or more examples described above (Fig. 1) and/or below (e.g. Fig. 3 -10).

Fig. 3 shows a slot and resource grid structure in NR V2X SL.

The SS burst periodicity limits the ability of performing SS-based beam sweeps to 160ms. Although the configurability of this parameter is suggested to be supported , complementary beam determination and refinement can be realized by CSI-RS in SL. As illustrated in Fig. 3, the slot structure in NR V2X is designed to accommodate the PSSCH, the PSCCH and the PSFCH in a single subchannel. While PSCCH and PSFCH are used for general control information, resource reservation, and HARQ feedback control, and are not necessarily present in all the PRBs that form a subchannel ; CSI-RS signals and the corresponding CSI reports are always allocated in the PSSCH . The CSI-RS only supports 1 or 2 antenna ports, and an average of one resource element per PRB , assuming CSI-RS will extend across each PRB within the subchannel. CSI reports, here as well, will provide feedback to the transmitter to indicate those resources most suitable for optimum reception.

As a proof-of-principle two traffic scenarios are modelled for the evaluation, Manhattan (urban) and highway, according to the evaluation methodologies of 3GPP for V2X. The properties of each scenario are summarized in Tab. 1. To obtain realistic vehicle distributions across the scenarios, vehicles are dropped in SUMO tool so that the distance between new vehicles in the same lane corresponds to a safety distance proportional to the lane speed. Vehicle dropping thus follows an exponential probability distribution where the mean time gap between consecutively dropped vehicles is 2 s at the lane speed. In the simulation, dropped vehicles interact with each other following basic traffic rules.

Tab. 1: Configuration of vehicular traffic modelling for the case scenarios under evaluation.

|  | Urban | Highway |
|---|---|---|
| Description | 9 blocks of Manhattan Grid | Two-way highway |
| Lanes | 2 in each direction | 3 in each direction |
| Lane width | 3.5 m | 4m |
| Grid size | 433 m x 250 m | N/A |
| Simulation area | 1299 m x 750 m | 2000 m |
| Vehicle velocity | 60 km/h  Going straight: 50% | 80/100/140/40/30/20 km/h |
| Intersection turn probability | Turning left: 25%  Turning right: 25% | N/A |

Vehicles in the simulation carry a mmWave antenna system with four antenna panels operating in the n257 5G band (26.50 - 29.50 GHz). Each panel sectorizes the azimuth plane in a way that each one faces its corresponding 90° sector - for convenience: the front, back and sides of the vehicle. The panels consist of multi-element antenna arrays with beamforming capabilities designed to cover the steering range required for each sector ($\pm 45°$).

As V2V links occur in the same elevation plane, the antenna arrays in this calculation have a single vertical element, whereas the required steering range in azimuth is covered with $N_{ant}$ horizontally arranged elements. Each panel operates with a pre-configured beamset with $N_c$ coarse beams and $N_f$ fine beams. The fine beams are formed with a generalized DFT codebook with an offset of $-(1 + N_{ant})/2$. The weights for analog beamforming for each of these beams ($\mathbf{u}_i$) is expressed as:

$$\mathbf{u}_i = \frac{1}{\sqrt{N_{ant}}} \left[ e^{-j\frac{2\pi}{N_f}\left(i - \frac{N_f + 1}{2}\right)}, \, e^{-j\frac{2\pi}{N_f}2\left(i - \frac{N_f + 1}{2}\right)}, \right.$$
$$\left. \ldots, \, e^{-j\frac{2\pi}{N_f}N_{ant}\left(i - \frac{N_f + 1}{2}\right)} \right], \quad (1)$$

where $i = 1, 2, \ldots, N_f$ and, depending on the oversampling ($O$) of the codebook, the number of fine beams is $N_f = ON_{ant} + 1$. This method quantizes the angular space and uniformly covers the steering range. Coarse beams are then formed by combining fine beams in a hierarchical fashion. By assuming a fully-connected hybrid beamforming architecture with $N_{RF}$ RF ports, $N_{RF}$ beams can potentially be combined to create increasingly wide beams. The antenna system thus combines fine beams into coarser widths using:

$$\mathbf{v}_k = \frac{1}{\sqrt{N_{RF}}} \sum \mathbf{u}_p \, e^{jw_o p}, \quad (2)$$

where $k = 1, 2, \ldots, N_c$. Here, p denotes the indices of each of the contiguous fine beams being combined. The parameter $w_o$ is optimized for each different $N_{RF}$ value so that the gain ripple of the aggregated radiation pattern is minimized.

The channel modeling is performed for the vehicular scenarios detailed in Tab. 1. The link-level interactions are calculated by means of the QuaDRiGa tool for the vehicle trajectories initially obtained in SUMO. The channel response is the result of GBSCM simulation based on the specifications of the 3GPP. GBSCM provides a trade-off between repeatability, generalization and accuracy. Purely stochastic models suffer from a lack of physical meaning and some spatial information is lost, whereas ray tracing tools offer a highly accurate channel model at the expense of very time consuming calculations. In addition, the latter reduces the applicability of the results to the specific scenario under study and it is constrained to the realism of the actual model.

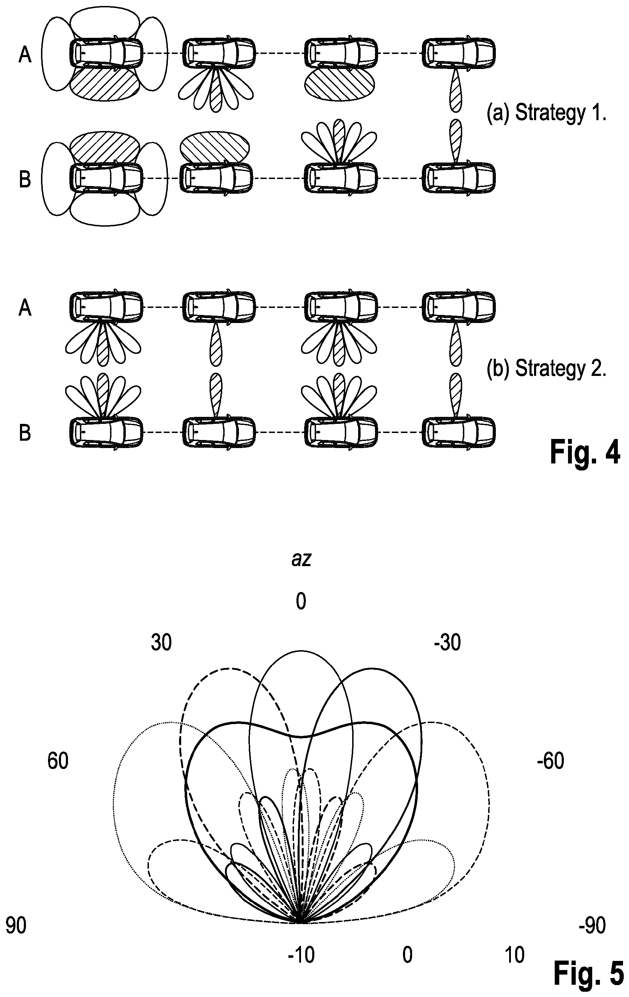

More details and aspects are mentioned in connection with the embodiments described above and/or below. The example shown in Fig. 3 may comprise one or more optional additional features corresponding to one or more aspects mentioned in connection with the proposed concept or one or more examples described above (Fig. 1 - 2) and/or below (e.g. Fig. 4-10).

Fig. 4a-4b show proposed beam management strategies for V2V beamforming.

Different visibility conditions between vehicles are considered following the abovementioned recommendations: LOS, NLOS (building blockage) and NLOSv (LOS path blocked by one or more vehicles). The QuaDRiGa channel calculations defines a set of arbitrary multipath radio channels by determining some initial settings with stochastic models, whereas the particular contributions of the scattering clusters are computed with the addition of various rays with individual angular and temporal features based on GBSCM.

In this study two beam management strategies constrained to the aforementioned tools provided by NR-V2X are compared to assess which one might be more suitable for V2V scenarios. A set of vehicle pairs in the scenario are linked and the strategies are evaluated by measuring the power received by each of the target nodes during the simulation time, being the results affected by visibility conditions and channel selectivity phenomena. The following strategies, and their underlying power profiles, are measured for the linked vehicle pairs under evaluation:

- **Reference (R). Perfect beam-alignment:** all the fine beam combinations for both vehicles are measured every simulation snapshot and the beam pair that provides the maximum RSRP is always chosen.
- **Strategy 1 (SG1). Coarse anchoring and refinement:** Every $T_{SS}$ a SS burst measures all coarse beam combinations for both vehicles and defines a coarse anchor. Then, $K_{CSI}$ CSI bursts are performed between SS bursts for each node, where a subset of $1 + N_{ngn}$ fine beams from the transmitter are measured using the coarse anchor from the receiver end, as shown in Fig. 4a. The transmitting fine beam that provides the maximum RSRP is chosen. The same process is also performed inversely $K_{CSI}$ times to choose the most suitable receiving fine beam.

- **Strategy 2 (SG2). Fine tracking:** Both S-SSB and CSI are used to measure fine beams. Every $T_{SS}$ and $K_{CSI}$ times inbetween both nodes measure all combinations of a subset of $1 + N_{ngh}$ fine beams, as shown in Fig. 4b. The beam pair that provides the maximum RSRP is chosen until the next measurement. The initial beam is determined by a full sweep.

These two strategies exemplify two different approaches to tackle beam management in V2V scenarios. Both strategies aim to maintain a beamformed link with fine beams, yet present significant practical differences regarding stability, resource utilization and failure recovery. The reference signal is assumed as the maximum achievable power performance between the nodes. However, as it is unfeasible resource-wise to perform the reference measurement, the proposed strategies make use of ($N_{ngh}$) neighbor beams. When used, this subset of beams takes the previously chosen fine beam (from the previous measurement) and $N_{ngh}/2$ contiguous beams within the beamset at each side.

The proposed strategies have been evaluated in terms of power performance and channel usage. In Tab. 2 the configuration parameters used for the simulation are detailed.

Tab. 2: Parameters used for the Simulation.

| Parameter | | Value |
|---|---|---|
| Transmission power | $P_{tx}$ | [0, 23] dBm |
| Channel model | | 3GPP 37.885 [18] |
| Number of panels | | 4 |
| Combined RF ports | $N_{RF}$ | 1 (fine), 3 (coarse) |
| Antennas per panel | $N_{ant}$ | 4 |
| DFT Oversampling | O | 1 |
| Fine beams per panel | $N_f$ | 5 |
| Coarse beams per panel | $N_C$ | 1 |
| Aggregated pattern flattening | $\omega_0$ | 5.75 |
| Simulation time | | 120 s |
| Central frequency | F | 28 GHz |
| Bandwidth | BW | 50, 100, 200 MHz |
| Subchannel size | $N_{PRB}^{sch}$ | 10 PRB |
| Number of neighbors | $N_{ngh}$ | 4, 6, 8, 10 |
| Number of CSI bursts | $K_{CSI}$ | 1, 3 |

More details and aspects are mentioned in connection with the embodiments described above and/or below. The example shown in Fig. 4 may comprise one or more optional additional features corresponding to one or more aspects mentioned in connection with the proposed concept or one or more examples described above (Fig. 1 - 3) and/or below (e.g. Fig. 5-10).

Fig. 5 shows a radiation pattern for the beamset used in the evaluation (Directivity [dB]).

The performance of both strategies has been measured for different configuration parameters. The power profile for each pair of nodes is compared with the reference beam alignment strategy in order to evaluate the overall performance of the proposed strategies. A two-level hierarchical beamset is built using $N_{ant} = 4$ antenna elements per panel, using 1 port for the fine beams and 3 ports for the coarse beams. The resulting pre-configured beamset for one panel, which is replicated and rotated to face the sector of each corresponding panel, is shown in Fig. 5. The resulting beams have a directivity of 12 dB and 7.9 dB for the fine and coarse configurations, respectively. The coarse beam has a half-power beamwidth of 94°, covering the whole sector, whereas the half-power beamwidth for the fine beams ranges from 24° to 35°, being sharper in the broadside. The most steered beams in neighboring panels overlap so that the panel switching is less frequent when the steering angle is at the edge of the steering range. A total of 5 fine beams and 1 coarse beams result from the calculations in (1) and (2), thus accounting for a total of 20 fine beams and 4 coarse beams using all panels.

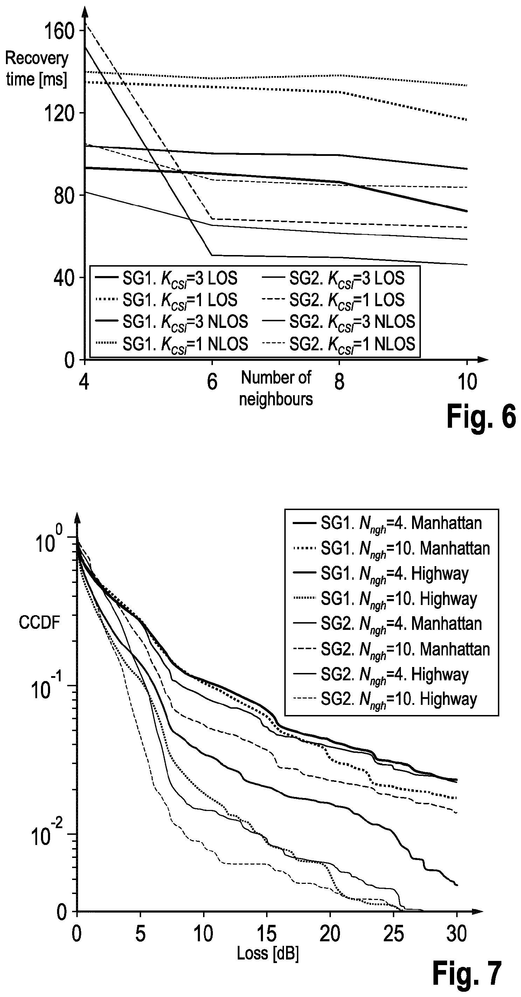

More details and aspects are mentioned in connection with the embodiments described above and/or below. The example shown in Fig. 5 may comprise one or more optional additional features corresponding to one or more aspects mentioned in connection with the proposed concept or one or more examples described above (Fig. 1 - 4) and/or below (e.g. Fig. 6 - 10).

Fig. 6 shows a mean recovery time of beam management strategies for different number of neighbors in LOS and NLOS visibility conditions.

From this beamset the beam management strategies are evaluated using different number of neighbors ($N_{ngh}$ = {4,6,8,10}). In Fig. 6, the mean time it takes for each configuration to recover from a misalignment is illustrated for the Manhattan scenario, where both LOS and NLOS visibility conditions are given. This recovery time is extracted from the instant at which the power profile deviates from the reference and ends when the strategy finds the same beam as the reference. Here, two values for $K_{CSI}$ are considered. As CSI-based beam trainings occur in-between SSB burst, the $K_{CSI}$ values being compared, 1 and 3, can be translated to a mean beam update rate of 80 ms and 40 ms, respectively. As seen in Fig. 6, the dashed lines correspond to a slower update and thus an increase in the mean recovery rate is shown in every situation. Strategy 2 exhibits higher resilience to misalignment, as an increase in update rate only delivers a mean of 15.9 ms less recovery time in LOS conditions and 23.4 ms in NLOS conditions. Conversely, Strategy 1 sees its recovery time improved from 38 ms to 42.9 ms when switching to a more frequent beam update rate, around twice the time compared to SG1. It is worth noting that none of the strategies gets severely impaired in terms of beam recovery when visibility conditions worsen, and NLOS conditions remain comparable to LOS in all cases.

From Fig. 6 it can also be seen how none of the configurations exceed 160 ms of sustained misalignment. This might appear obvious for SG1, as a full coarse beam search is performed every 160 ms, but also gives merit to SG2, which has no mechanism to ensure certainty about the fact that the chosen beam is the optimum one. As for the number of neighbors, none of the considered configurations gets close to a perfect beam alignment, so full misalignment prevention may require more aggressive strategies. Nevertheless, all configurations at least appear to stabilize with a less ambitious beamset size. SG1 shows little improvement when changing from 4 to 10 neighbors. SG2 presents nonetheless a noticeable improvement when more than 6 neighbors are used, and it presents in this situation the best performance in terms of beam recovery.

To properly evaluate the damage exerted over the link quality due to the misalignment, the loss in power with respect to the reference profile is calculated for both strategies. In Fig. 6, the loss dimension when the strategies' power profiles deviate from the reference is shown. To visualize this loss, the complementary cumulative distribution function (CCDF) of the experienced losses for all vehicles is deemed convenient to evaluate which potential losses each strategy would experience. In Fig. 6, a noteworthy difference between scenarios can be seen, which can be due to the variability of the required pointing angles. Links in a Manhattan scenario may experience a wider range of potential angles of arrival in the same data session, whereas links in a highway scenario require less frequent beam switch. This increased beam update requirement in the Manhattan scenario, when handled by practical beam update rates and manageable beamsets, provides an increase in losses, as in some maneuvers the optimum beam quickly deviates from the one being used.

In these results, 70% of the time the loss stays below 3 dB which, according to the ripple in the aggregated fine pattern, can be seen as if the chosen beam is generally the optimum one or one consecutive neighbor. Although this loss can be acceptable in normal operation, it is also important to consider the loss experienced at a low probability as it will eventually extrapolate to reliability at link level. When CCDF=$10^{-1}$, the loss observed in Fig. 6 is exceeded 10% of the time. SG1 presents then a 10% probability of exceeding a 10.9 dB power loss with $N_{ngh}$ = 4 and 10.5 dB with $N_{ngh}$ = 10 in the Manhattan scenario, and this margin when using different $N_{ngh}$ slightly increases for the highway scenario - which ranges from 6.0 dB to 5.3 dB, respectively - consolidating further its independence from the number of neighbors. SG2 presents less power loss with the same probability, with 8.2 dB for the Manhattan scenario and 5.4 dB in highway for the case with 4 neighbors, a value that decreases uniformly around 1.5 dB when $N_{ngh}$ = 10. Again, the increase in $N_{ngh}$ makes a noticeable impact on SG2 performance. It is also worth paying attention to the data when it approximates the 1% threshold. For the highway scenario - allegedly the best performing one - switching from 10 to 4 neighbors increases the 1% probability-conditioned loss more than 10 dB for SG1 and around 6 dB for SG2, and the losses quickly reach over 30 dB for the Manhattan scenario; a marginally-occurring but decisive loss that can severely impair the link down to outage and might be critical when aiming for negligible error rates.

More details and aspects are mentioned in connection with the embodiments described above and/or below. The example shown in Fig. 6 may comprise one or more optional additional features corresponding to one or more aspects mentioned in connection with the proposed concept or one or more examples described above (Fig. 1 - 5) and/or below (e.g. Fig. 7-10).

Fig. 7 shows a loss complementary cumulative distribution of beam management strategies in different traffic scenario for $N_{ngh}$ = {4,10} and LOS conditions.

One relevant difference between the proposed strategies is the need for resources. SG1 is able to measure fine beams against a coarse anchor beam previously established, every CSI burst consists of 1 + $N_{ngh}$ measurements and thus $2 \times (1 + N_{ngh})$ CSI resources are required to obtain a fine beam pair. Conversely, by using SS bursts also for fine beam tracking, SG2 needs to attempt all fine combinations every measurement, requiring $(1 + N_{ngh})^2$ CSI resources and therefore having exponentially increasing resource needs.

To measure the resource usage of each strategy, the interference sensed by receiving vehicles is calculated in a scenario where all vehicles are performing the same strategy. The traffic model in the highway scenario has been slightly modified to showcase an extreme case with very high vehicle density, in a way that all vehicles are separated with a safety time gap of 2.5 s. The parameter used to compare resource usage is the CUR, which represents the extent to which the channel is utilized by the occupied resources conditioned to the receiving beam in each case. Each link pair exchanges data with medium traffic intensity, which according to implies a 20% and 80% chance of generating a 1.2 kbyte and 0.8 kbyte payload, respectively, with a 30 ms inter-packet reception rate; and also exchange the S-SSB and CSI resources required to align their beams. CUR is thus calculated, for a 100 ms window, by measuring PRB-wise the intended data exchange and the sensed interferences captured by the receiving beam for each vehicle, and then averaging the sensed channel usage for all the vehicles with respect to the total resource pool capacity.

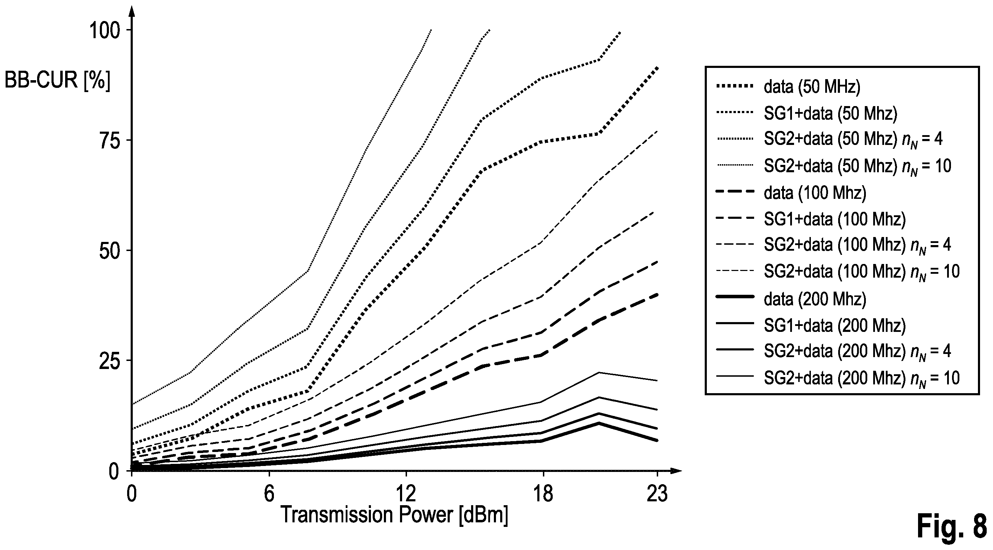

More details and aspects are mentioned in connection with the embodiments described above and/or below. The example shown in Fig. 7 may comprise one or more optional additional features corresponding to one or more aspects mentioned in connection with the proposed concept or one or more examples described above (Fig. 1 - 6) and/or below (e.g. Fig. 8 - 10).

Fig. 8 shows a beam-based Channel Usage Ratio (BB-CUR) for medium intensity data traffic and the resources needed by the proposed strategies, compared for different total channel bandwidths (BW) and number of neighbors ($N_{ngh}$).

The share of the channel used when all the vehicles exchange data with the proposed strategies is shown in Fig. 8. Here, the CUR occupied by the data traffic with and without the overheads associated with each strategy is presented for different channel bandwidth options ($BW$ = {50,100,200} MHz) and transmission power ($P_{tx}$). The power transmitted, which is homogenized across the entire simulation for simplicity, affects the extent to which each radiated signal spans in space and therefore increases the coverage of an interferring wave. CUR appears to increase linearly with the configured transmission power, yet at different rates depending on the total channel bandwidth. Indeed, our CUR results for only data can be fairly approximated by BB-CUR [%] $\simeq$ 9.5 Ptx [dBm] e-0.02 BW[MHz]. The usage ratio when the strategies are used together with data increases considerably, and especially in the 50 MHz case none of the strategies would support the largest configurable $P_{tx}$ without exceeding the total pool capacity.

In these results, SG1 curves for different $N_{ngh}$ are almost equal and an average of all $N_{ngh}$ configurations is presented in Fig. 8. A data exchange using SG1 uses a smaller share of the channel compared to any of the evaluated SG2 configurations. Although how CUR relates to the final link reliability is left out of the scope of this evaluation, some practical limits found in the literature can be applied to the study. A usage ratio up to 80% might be reasonable for broadcast links with relaxed reliability requirements. However, for unicast/groupcast links where link reliability can be a stringent demand for some applications, the channel usage ratio must be significantly reduced. In this cited study, a usage ratio of 33.6% is used as an acceptable bound for reliable data exchange, based on results. Accordingly, such a threshold is easily surpassed in most of the evaluated cases, and the maximum power cannot be used for transmission. Only in the 200 MHz configuration, CUR stays below 25% regardless of the strategy. However, for smaller channel bandwidths, the maximum $P_{tx}$ that may be used in SG2 is from 2 dB to 4dB lower to that of SG1, with the underlying loss in coverage for the same CUR.

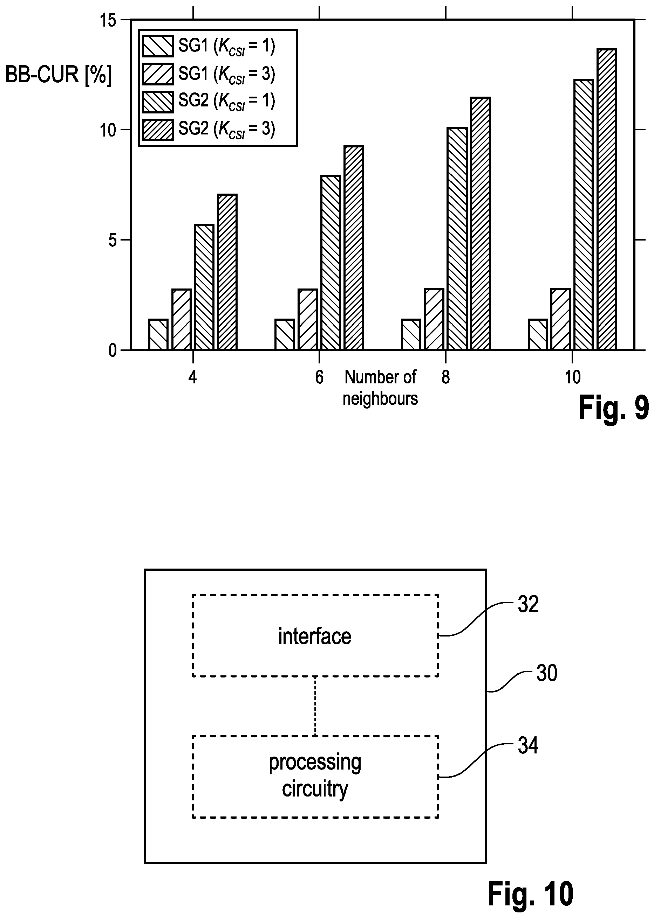

More details and aspects are mentioned in connection with the embodiments described above and/or below. The example shown in Fig. 8 may comprise one or more optional additional features corresponding to one or more aspects mentioned in connection with the proposed concept or one or more examples described above (Fig. 1 - 7) and/or below (e.g. Fig. 9 - 10).

Fig. 9 shows a beam-based Channel Usage Ratio (BB-CUR) of the resources needed by the proposed strategies for different $K_{CSI}$, transmission power of 23 dBm and 200 MHz bandwidth.

A closer look to the effects of the strategies on channel occupancy can be seen in the slice shown in Fig. 9. Here, the maximum transmission power is used ($P_{tx}$ = 23 dBm) to exemplify the highest levels of CUR. Channel usage is not significantly affected by the increase of CSI bursts, and CUR increases less than 2 percentage points when the beam is more frequently updated. The number of neighbors does however affect SG2. While $N_{ngh}$ makes negligible increments for SG1, the CUR for SG2 increases linearly and is twice as high for 10 neighbors compared to 4. SG2 presents always the largest values of CUR, even for 4 neighbors, where the channel usage is 4 times the one experienced in SG1 in the $K_{CSI}$ = 3 case.

The use of multi-element antenna systems in vehicles stands as a promising enabler for the most demanding driving applications foreseen in the connected and automated future of transportation. The millimeter wave band and its large available bandwidths will be the next step to support the most data-hungry services, however the use of beamforming to target surrounding V2X nodes might is essential to overcome the propagation hurdles at these bands. Handling rapidly variant vehicular scenarios is nonetheless cumbersome when the beams between connected pairs need to be continuously aligned, and therefore a framework for beam management in vehicular scenarios should be considered to advance in the field. In this paper the possibilities for beamformed vehicular communications with the currently specified NR-V2X mechanisms are described. With these considerations, two beam management strategies have been proposed, inspired by conventional procedures used today for links with the base station. The strategies are analyzed in terms of power performance - addressing time and power loss related issues - and channel usage, materialized here as the Beam-based Channel Usage Ratio (BB-CUR).

The proposed strategies differ fundamentally in the approach to maintain the optimum beam pair from a subset of beams, either by establishing a wide-beam anchor and refining (Strategy 1) or by constantly measuring a subset of sharp beams (Strategy 2). The latter appears to show reduced power loss and beam recovery time than its non-anchored counterpart with a relatively small beamset size; whereas both approaches see these metrics improved when beams are more frequently updated.

Although operating just with fine beams (Strategy 2) presents the best performing power metrics, Strategy 1 remains stable regardless of the beamset size, so having a coarse anchor beam appears to give predictable results unless this one deviates from the optimum. When the resource usage of each configuration is assessed, attempting to measure all beam combinations within a beamset quickly becomes unwieldy, and the channel occupancy of the required signaling outweighs the benefits in power performance obtained with this apparently more agile strategy. As resource-intensive configurations will become unfeasible for small channel bands, the stability and low usage here exhibited by the anchored strategy may turn into the only option when high reliability is pursued. As the results suggest, resource usage appears more dependent on the angular span of the beamset being used than on the measurement rate performed by the training pairs.

More details and aspects are mentioned in connection with the embodiments described above and/or below. The example shown in Fig. 9 may comprise one or more optional additional features corresponding to one or more aspects mentioned in connection with the proposed concept or one or more examples described above (Fig. 1 - 9) and/or below (e.g. Fig. 10).

Fig. 10 shows a block diagram of an apparatus 30. The apparatus 30 comprises one or more interfaces 32 configured to communicate with a communication device or user equipment. The apparatus 30 further comprises processing circuitry 34 configured to control the one or more interfaces 34 and to perform the method for the vehicle as described above (e.g., described with reference to Fig.1).

For example, the apparatus 30 can be comprised by a vehicle. For example, the vehicle may be a land vehicle, such a road vehicle, a car, an automobile, an off-road vehicle, a motor vehicle, a bus, a robo-taxi, a van, a truck or a lorry. Alternatively, the vehicle may be any other type of vehicle, such as a train, a subway train, a boat or a ship. For example, the proposed concept may be applied to public transportation (trains, bus) and future means of mobility (e.g., robo-taxis).

As shown in Fig. 10 the respective one or more interfaces 32 are coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface 32, so that any data transfer that occurs over the interface and/or any interaction in which the interface may be involved may be controlled by the processing circuitry 34.

In an embodiment the apparatus 30 may comprise a memory and at least one processing circuitry 34 operably coupled to the memory and configured to perform the below mentioned method.

In examples the one or more interfaces 32 may correspond to any means for obtaining, receiving, transmitting or providing analog or digital signals or information, e.g., any connector, contact, pin, register, input port, output port, conductor, lane, etc. which allows providing or obtaining a signal or information. An interface may be wireless or wireline and it may be configured to communicate, e.g., transmit or receive signals, information with further internal or external components. The one or more interfaces 32 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

More details and aspects are mentioned in connection with the embodiments described above. The example shown in Fig. 10 may comprise one or more optional additional features corresponding to one or more aspects mentioned in connection with the proposed concept or one or more examples described above (Fig. 1 - 9).

The aspects and features described in relation to a particular one of the previous examples may also be combined with one or more of the further examples to replace an identical or similar feature of that further example or to additionally introduce the features into the further example.

Examples may be compliant to or even comprised in certain standard specifications, such as those specified by the 3GPP. Configuration information may for example be communicated using signaling radio bearers, e.g. by means of Radio Resource Control (RRC) messages, which are, for example, specified in the *.331 series of 3GPP as layer 3 control plane messages. For example, physical layer specification, e.g. by means of Doppler Delay Resolutions and other physical layer specifications may also be affected by present embodiments, e.g., *.201, *.211, *.212, *.213, *.214, *.216 series in the 3GPP specifications.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F) PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

**Claims**

1.    A method (100) for a vehicle communicating with one or more further vehicles, comprising

    determining (110) one or more authorized vehicles from a plurality of vehicles;
    determining (120) a setting for an adaptive antenna to obtain spatially separated signals to communicate with the one or more authorized vehicles; and
    communicating (130) with the one or more authorized vehicles using the spatially separated signals.

2.    The method (100) according to claim 1, wherein
    the spatial separated signals are determined such that the spatially separated signals are directed towards the one or more authorized vehicles.

3.    The method (100) according to claim 1 or 2, wherein
    determining the one or more authorized vehicles is performed by an authorization process between the vehicle and the one or more authorized vehicles.

4.    The method (100) according to claim 1 or 2, wherein
    determining the one or more authorized vehicles is performed by receiving data about one or more authorized vehicles.

5.    The method (100) according to any of the preceding claims, further comprising

    determining a signal parameter of the separated signals and if the signal parameter exceeds a threshold removing a vehicle from the one or more authorized vehicles;
    determining a new setting for the adaptive antenna to obtain spatially separated signals; and
    if the signal parameter still exceeds the threshold repeat removing another vehicle from the one or more authorized vehicles and determining a new setting until the signal parameter does not exceed the threshold.

6.    The method (100) according to any of the preceding claims, further comprising determining a signal parameter of the separated signals and if the signal parameter exceeds a threshold changing a radio access technology and/or a frequency band of the spatially separated signals.

7. The method (100) according to claim 5 or 6, wherein
the threshold depends on an application-specific group of nodes.

8. The method (100) according to any of the preceding claims, further comprising determining a position of one or more unauthorized vehicles; and
wherein the spatial separated signals are determined such that received signals from the one or more unauthorized vehicles are decreased.

9. The method (100) according to claim 8, wherein
the one or more unauthorized vehicles are determined based on a cooperative awareness message or beam-based sensing.

10. The method (100) according to any of the preceding claims, wherein
the adaptive antenna comprises multiple antenna elements to obtain the spatially separated signals using beamforming and/or spatial interference cancellation techniques.

11. The method (100) according to any of the preceding claims, further comprising
determining an angular direction of a signal using predefined pilot or synchronization signal settings of a radio access technology.

12. The method (100) according to claim 11, further comprising
extracting a signal based on the estimated angular direction.

13. An apparatus (30), comprising:

one or more interfaces (32) configured to communicate with a communication device or user equipment; and
processing circuitry (34) configured to control the one or more interfaces (32) and to: perform the method (100) according to any of claims 1 - 12.

14. A vehicle comprising the apparatus (30) according to claim 13.

15. A computer program having a program code for performing the method (100) according to any one of claims 1 - 12, when the computer program is executed on a computer, a processor, or a programmable hardware component.

**Patentansprüche**

1. Verfahren (100) für ein Fahrzeug, das mit einem oder mehreren weiteren Fahrzeugen kommuniziert, umfassend

Bestimmen (110) eines oder mehrerer autorisierter Fahrzeuge aus einer Vielzahl von Fahrzeugen;
Bestimmen (120) einer Einstellung für eine adaptive Antenne, um räumlich getrennte Signale für die Kommunikation mit einem oder mehreren autorisierten Fahrzeugen zu erhalten; und
Kommunizieren (130) mit dem einen oder mehreren autorisierten Fahrzeugen unter Verwendung der räumlich getrennten Signale.

2. Verfahren (100) nach Anspruch 1, wobei
die räumlich getrennten Signale bestimmt werden, sodass die räumlich getrennten Signale auf das eine oder die mehreren autorisierten Fahrzeuge gerichtet sind.

3. Verfahren (100) nach Anspruch 1 oder 2, wobei
das Bestimmen des einen oder der mehreren autorisierten Fahrzeuge durch einen Autorisierungsprozess zwischen dem Fahrzeug und dem einen oder den mehreren autorisierten Fahrzeugen durchgeführt wird.

4. Verfahren (100) nach Anspruch 1 oder 2, wobei
das Bestimmen des einen oder der mehreren autorisierten Fahrzeuge durch Empfangen von Daten über ein oder mehrere autorisierte Fahrzeuge durchgeführt wird.

5. Verfahren (100) nach einem der vorstehenden Ansprüche, ferner umfassend

Bestimmen eines Signalparameters der getrennten Signale und wenn der Signalparameter einen Schwellenwert überschreitet, Entfernen eines Fahrzeugs aus dem einen oder den mehreren autorisierten Fahrzeugen; Bestimmen einer neuen Einstellung für die adaptive Antenne, um räumlich getrennte Signale zu erhalten; und
wenn der Signalparameter immer noch den Schwellenwert überschreitet, Wiederholen des Entfernens eines anderen Fahrzeugs aus dem einen oder mehreren autorisierten Fahrzeugen und Bestimmen einer neuen Einstellung, bis der Signalparameter den Schwellenwert nicht mehr überschreitet.

6. Verfahren (100) nach einem der vorstehenden Ansprüche, ferner umfassend
Bestimmen eines Signalparameters der getrennten Signale und, wenn der Signalparameter einen Schwellenwert überschreitet, Ändern einer Funkzugangstechnologie und/oder eines Frequenzbandes der räumlich getrennten Signale.

7. Verfahren (100) nach Anspruch 5 oder 6, wobei
der Schwellenwert von einer anwendungsspezifischen Gruppe von Knoten abhängt.

8. Verfahren (100) nach einem der vorstehenden Ansprüche, ferner umfassend

Bestimmen der Position eines oder mehrerer nicht autorisierter Fahrzeuge; und
wobei die räumlich getrennten Signale bestimmt werden, sodass die empfangenen Signale von einem oder mehreren nicht autorisierten Fahrzeugen verringert werden.

9. Verfahren (100) nach Anspruch 8, wobei
das eine oder die mehreren nicht autorisierten Fahrzeuge basierend auf einer kooperativen Sensibilisierungsnachricht oder einer strahlenbasierten Erkennung bestimmt werden.

10. Verfahren (100) nach einem der vorstehenden Ansprüche, wobei
die adaptive Antenne mehrere Antennenelemente umfasst, um die räumlich getrennten Signale durch Strahlformung und/oder räumliche Interferenzunterdrückungstechniken zu erhalten.

11. Verfahren (100) nach einem der vorstehenden Ansprüche, ferner umfassend
Bestimmen einer Winkelrichtung eines Signals unter Verwendung vordefinierter Pilot- oder Synchronisierungssignaleinstellungen einer Funkzugangstechnologie.

12. Verfahren (100) nach Anspruch 11, ferner umfassend
Extrahieren eines Signals basierend auf der geschätzten Winkelrichtung.

13. Einrichtung (30), umfassend:

eine oder mehrere Schnittstellen (32), die für die Kommunikation mit einer Kommunikationsvorrichtung oder einer Benutzerausrüstung konfiguriert sind; und
Verarbeitungsschaltlogik (34), die konfiguriert ist, um die eine oder mehrere Schnittstellen (32) zu steuern und zum:
Durchführen des Verfahrens (100) nach einem der Ansprüche 1 bis 12.

14. Fahrzeug, umfassend die Einrichtung (30) nach Anspruch 13.

15. Computerprogramm, das einen Programmcode zum Durchführen des Verfahrens (100) nach einem der Ansprüche 1 bis 12 aufweist, wenn das Computerprogramm auf einem Computer, einem Prozessor oder einer programmierbaren Hardwarekomponente ausgeführt wird.

**Revendications**

1. Procédé (100) pour un véhicule communiquant avec un ou plusieurs autres véhicules, comprenant

   la détermination (110) d'un ou de plusieurs véhicules autorisés parmi une pluralité de véhicules ;
   la détermination (120) d'un réglage pour une antenne adaptative afin d'obtenir des signaux séparés dans l'espace pour communiquer avec le ou les véhicules autorisés ; et
   la communication (130) avec le ou les véhicules autorisés à l'aide des signaux séparés dans l'espace.

2. Procédé (100) selon la revendication 1, dans lequel
   les signaux séparés dans l'espace sont déterminés de sorte que les signaux séparés dans l'espace sont dirigés vers le ou les véhicules autorisés.

3. Procédé (100) selon la revendication 1 ou 2, dans lequel
   la détermination du ou des véhicules autorisés est réalisée par un processus d'autorisation entre le véhicule et le ou les véhicules autorisés.

4. Procédé (100) selon la revendication 1 ou 2, dans lequel
   la détermination du ou des véhicules autorisés est réalisée en recevant des données concernant un ou plusieurs véhicules autorisés.

5. Procédé (100) selon l'une quelconque des revendications précédentes, comprenant en outre

   la détermination d'un paramètre de signal des signaux séparés et, si le paramètre de signal dépasse un seuil, le retrait d'un véhicule du ou des véhicules autorisés ;
   la détermination d'un nouveau réglage de l'antenne adaptative afin d'obtenir des signaux séparés dans l'espace ; et
   si le paramètre de signal dépasse toujours le seuil, la répétition du retrait d'un autre véhicule du ou des véhicules autorisés et la détermination d'un nouveau réglage jusqu'à ce que le paramètre de signal ne dépasse pas le seuil.

6. Procédé (100) selon l'une quelconque des revendications précédentes, comprenant en outre
   la détermination d'un paramètre de signal des signaux séparés et, si le paramètre de signal dépasse un seuil, le changement d'une technologie d'accès radio et/ou d'une bande de fréquence des signaux séparés dans l'espace.

7. Procédé (100) selon la revendication 5 ou 6, dans lequel
   le seuil dépend d'un groupe de nœuds spécifique à une application.

8. Procédé (100) selon l'une quelconque des revendications précédentes, comprenant en outre

   la détermination d'une position d'un ou de plusieurs véhicules non autorisés ; et
   dans lequel les signaux séparés dans l'espace sont déterminés de telle sorte que des signaux reçus du ou des véhicules non autorisés sont réduits.

9. Procédé (100) selon la revendication 8, dans lequel
   le ou les véhicules non autorisés sont déterminés sur la base d'un message de sensibilisation coopératif ou d'une détection basée sur un faisceau.

10. Procédé (100) selon l'une quelconque des revendications précédentes, dans lequel
    l'antenne adaptative comprend de multiples éléments d'antenne pour obtenir les signaux séparés dans l'espace à l'aide de techniques de formation de faisceau et/ou d'annulation d'interférence dans l'espace.

11. Procédé (100) selon l'une quelconque des revendications précédentes, comprenant en outre
    la détermination d'une direction angulaire d'un signal à l'aide de réglages prédéfinis de signal pilote ou de synchronisation d'une technologie d'accès radio.

12. Procédé (100) selon la revendication 11, comprenant en outre
    l'extraction d'un signal sur la base de la direction angulaire estimée.

**13.** Appareil (30) comprenant :

une ou plusieurs interfaces (32) configurées pour communiquer avec un dispositif de communication ou un équipement utilisateur ; et
une circuiterie de traitement (34) configurée pour commander la ou les interfaces (32) et pour :
réaliser le procédé (100) selon l'une quelconque des revendications 1 à 12.

**14.** Véhicule comprenant l'appareil (30) selon la revendication 13.

**15.** Programme informatique ayant un code de programme permettant de réaliser le procédé (100) selon l'une quelconque des revendications 1 à 12, lorsque le programme informatique est exécuté sur un ordinateur, un processeur, ou un composant matériel programmable.

100

110

determining one or more authorized vehicles from a
plurality of vehicles

120

determining a setting for an adaptive antenna to obtain
spatially separated signals to communicate with the one
or more authorized vehicles

130

determining a setting for an adaptive antenna to obtain
spatially separated signals to communicate with the one
or more authorized vehicles

**Fig. 1**

Fig. 2

Fig. 3

(a) Strategy 1.

(b) Strategy 2.

**Fig. 4**

*az*

**Fig. 5**

Fig. 6

Fig. 7

Fig. 8

**Fig. 9**

**Fig. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3579443 A
- US 10637142 B1
- WO 2019160973 A1
- US 10440668 B1